# EUROPÄISCHE PATENTSCHRIFT

(11) **EP 1 695 804 B1**
(45) Veröffentlichungstag und Bekanntmachung des Hinweises auf die Patenterteilung: **23.11.2016**
(21) Anmeldenummer: 06003703.3
(22) Anmeldetag: 23.02.2006
(51) Int. Cl.: B29C 33/38, B29C 70/48, B29K 705/00

(54) **Vorrichtung, Anordnung und Verfahren zum Herstellen eines Bauteils**
Apparatus, arrangement and process for producing a component
Appareil, dispositif et procédé de fabrication d'un élément

(30) Priorität: 24.02.2005 DE 102005008479; 24.02.2005 US 656270 P
(43) Veröffentlichungstag der Anmeldung: 30.08.2006
(73) Patentinhaber: Airbus Operations GmbH, 21129 Hamburg (DE)
(72) Erfinder: Otten, Vidina, 26340 Zetel (DE); Siebrecht, Dirk, 26316 Varel (DE)
(74) Vertreter: Kopf Westenberger Wachenhausen Patentanwälte PartG mbB

(56) Entgegenhaltungen:
- WO-A-00/54949
- WO-A-2005/070642
- ROBERT W. LIN: "Early Cost Estimation for Manufacturing of Tooling in Resin Transfer Molding" MURJ, [Online] Bd. 3, 2000, Seiten 61-64, XP002382441 Gefunden im Internet: URL:http://web.mit.edu/murj/www/v03/v03-Re ports/v03-r4.pdf> [gefunden am 2006-05-23]
- SPECIAL METALS CORPORATION: "A word about "INVAR"[Online] 2001, XP002382442 Gefunden im Internet: URL:http://www.specialmetals.com/documents /Nilo%20alloys%20for%20Tooling.pdf> [gefunden am 2005-05-22]
- "Krupp VDM gets airbus into shape" METAL TIMES, [Online] Bd. 22, 2000, XP002382443 Gefunden im Internet: URL:http://metaltimes.de/MT22/E_Artikel-08 .aspx> [gefunden am 2006-05-22]

## Beschreibung

Die Erfindung betrifft eine Vorrichtung, eine Anordnung und ein Verfahren zum Herstellen eines Bauteils.

Beim sogenannten "Resin Transfer Molding"-Verfahren (RTM-Verfahren) werden komplexe Faserverbundkunststoffe mit hohem Faservolumengehalt durch das Tränken von trockenen Faserhalbzeugen mit Harz generiert. Das RTM-Verfahren, auch Harzinjektionsverfahren genannt, ist ein geschlossener Prozess, der enge Fertigungstoleranzen bezüglich Bauteilgewicht, Faservolumengehalt und Bauteilmaßen gestattet. In der verfahrenstechnischen Umsetzung wird ein trockenes Faserhalbzeug in ein zweigeteiltes beheiztes Werkzeug gelegt und durch ein Harz niedriger Viskosität mit Überdruck in Wirkkontakt gebracht. Dabei durchströmt das Harz die Faserlagen und kann, nachdem es die Fasern durchtränkt hat, an Entlüftungsöffnungen austreten.

Für das RTM-Verfahren kann eine untere Form mit Fasermatten und ggf. Zusatzteilen (zum Beispiel Schaumkerne) ausgelegt werden. Nach Verschließen der unteren Form mit einer oberen Form werden die geschlossenen Formen unter Vakuum gesetzt und das Harz mittels einer Pumpe eingespritzt. Durch Erhitzen wird dann ein Kompositbauteil erzeugt, das nach dem Öffnen der Form aus der Form entnommen wird.

Mit dem RTM-Verfahren erzeugte Faserverbundkunststoffe können in zahlreichen Branchen wie dem Fahrzeugbau oder der Luft- und Raumfahrtindustrie für Strukturbauteile eingesetzt werden. Beispiele für faserverstärkte Kunststofferzeugnisse umfassen Beschläge für ein Seitenleitwerk eines Flugzeugs, Verkleidungselemente von Pkws oder Hochdächer und Windleitsysteme von Lkws.

Mit dem RTM-Verfahren können somit Kompositteile hergestellt werden. Je nach Werkzeuggestaltung und Materialwahl ist eine Endmaßfertigung möglich.

Es gibt unterschiedliche Prozessvarianten des RTM-Verfahrens. Bei einem Harzinjektionsverfahren werden Strukturbauteile aus faserverstärktem Kunststoff erzeugt, indem trockene Faserhalbzeuge in eine formgebende Kavität eingelegt werden, diese sodann geschlossen und das flüssige Harz injiziert wird. Aus der geschlossenen Formgebung resultieren allseitig definierte Form- und Lagetoleranzen des Bauteils. Unter geschlossener Formgebung wird eine feste (zum Beispiel metallische) Kavität aus mindestens zwei Formhälften verstanden, die als Ober- und Unterkavität bezeichnet werden können.

Bei bekannten Vorrichtungen zum Herstellen eines Bauteils mit dem RTM-Verfahren tritt das Problem auf, dass das Werkzeug beim Abkühlen auf das Bauteil aufschrumpfen kann. Ein beschädigungsfreies Entformen des Bauteils ist nur durch die Verwendung von umlaufenden Einsätzen (Kerne und Keile) möglich, die zwischen Wanne und Deckel einerseits und Material zum Herstellen des Bauteils andererseits eingelegt werden. Nach dem Herstellungsverfahren muss das Werkzeug nebst Einsätzen aufwendig von Harzresten gereinigt werden. Dabei verschleißen sowohl das Werkzeug als auch die Einsätze erheblich. Als Folge dieses Verschleißes sinkt die erzeugte Bauteilqualität in Bezug auf Maßhaltigkeit, Oberflächenqualität und Randstruktur. Eine Folge ist eine hohe Ausschussproduktion. Robert W. Lin "Early Cost Estimation for Manufacturing of Tooling in Resin Transfer Molding", MURJ (online), Bd. 3, 2000, Seiten 61-64, beschreibt einen RTM-Prozess. WO 02/074469 A2 und US 2004 0258605 beschreiben das Formen von Kompositstrukturen.

Es ist eine Aufgabe der Erfindung, das Herstellen eines Bauteils mit geringerem Aufwand zu ermöglichen.

Diese Aufgabe wird durch eine Vorrichtung zum Herstellen eines Bauteils und durch ein Verfahren zum Herstellen eines Bauteils mit den Merkmalen gemäß den unabhängigen Patentansprüchen gelöst.

Gemäß einem exemplarischen Ausführungsbeispiel der Erfindung ist eine Vorrichtung zum Herstellen eines Bauteils bereitgestellt, die eine Wanne aufweist, in die Ausgangsmaterial zum Herstellen des Bauteils einbringbar ist. Ferner enthält die Vorrichtung einen Deckel, der auf die Wanne derart einsetzbar ist, dass Ausgangsmaterial zum Herstellen des Bauteils zwischen der Wanne und dem Deckel einschließbar ist. Eine Heizeinrichtung ist zum Herstellen des Bauteils mittels Heizens von zwischen der Wanne und dem Deckel einschließbarem Ausgangsmaterial vorgesehen. Die Wanne ist aus einem Material mit einem Ausdehnungskoeffizienten hergestellt, der im Wesentlichen gleich einem Ausdehnungskoeffizienten von Ausgangsmaterial zum Herstellen des Bauteils ist.

Gemäß einem anderen exemplarischen Ausführungsbeispiel der Erfindung ist eine Anordnung zum Herstellen eines Bauteils geschaffen, die eine Vorrichtung mit den oben beschriebenen Merkmalen sowie Ausgangsmaterial zum Herstellen des Bauteils aufweist, das in die Wanne der Vorrichtung einbringbar ist oder zumindest teilweise in die Wanne eingebracht ist.

Gemäß einem anderen exemplarischen Ausführungsbeispiel der Erfindung ist ein Verfahren zum Herstellen eines Bauteils geschaffen, wobei bei dem Verfahren Ausgangsmaterial zum Herstellen des Bauteils in eine Wanne eingebracht wird, ein Deckel auf die Wanne derart eingesetzt wird, dass das Ausgangsmaterial zum Herstellen eines Bauteils zwischen der Wanne und dem Deckel eingeschlossen wird, und das zwischen der Wanne und dem Deckel eingeschlossene Ausgangsmaterial erhitzt wird, womit das Bauteil hergestellt wird. Die Wanne kann aus einem Material mit einem Ausdehnungskoeffizienten hergestellt sein, der im Wesentlichen gleich einem Ausdehnungskoeffizienten des Ausgangsmaterials zum Herstellen des Bauteils ist.

Unter "Ausdehnungskoeffizient" wird im Rahmen dieser Anmeldung der lineare Ausdehnungskoeffizient α verstanden, der die Ausdehnung eines Körpers unter dem Einfluss einer Temperaturänderung beschreibt und die Dimension K⁻¹ hat.

Der Ausdehnungskoeffizient der Wanne sollte im Wesentlichen gleich dem Ausdehnungskoeffizient des Materials zum Herstellen des Bauteils sein, und zwar vorzugsweise im gesamten Temperaturbereich des Verarbeitungsverfahrens, d.h. insbesondere im Bereich zwischen 20°C und 200°C.

Unter den Begriff "im Wesentlichen gleicher Ausdehnungskoeffizient" fällt im Rahmen dieser Anmeldung auch ein Ausdehnungskoeffizient der Wanne und/oder des Deckels, der geringfügig (zum Beispiel wenige Prozent) von dem Ausdehnungskoeffizienten des Ausgangsmaterials zum Herstellen des Bauteils abweicht, insbesondere ein Ausdehnungskoeffizient der Wanne und/oder des Deckels, der geringfügig kleiner als der Ausdehnungskoeffizient des Ausgangsmaterials zum Herstellen des Bauteils.

Ein Aspekt der Erfindung ist darin zu sehen, dass zumindest ein Teil eines Werkzeugs zum Herstellen eines Bauteils aus einem Material vorgesehen wird, das einen ähnlichen Ausdehnungskoeffizienten wie Material des herzustellenden Bauteils hat. Wenn dann während des Herstellungsverfahrens das Ausgangsmaterial gemeinsam mit diesem Teil des Werkzeugs (Wanne und/oder Deckel) erhitzt wird, kann nach dem Abkühlen des ausgehärteten Bauteils aufgrund der erfindungsgemäß ausgewählten Ausdehnungskoeffizienten von Werkzeug und Bauteilmaterial ein unerwünschtes Aufschrumpfen des Bauteils an dem Werkzeug sicher vermieden werden. Dies führt dazu, dass das Bauteil aus der abgekühlten Vorrichtung ohne Zuhilfenahme aufwendiger Hilfsmittel entnehmbar ist und an dem Werkzeug im Wesentlichen nicht anhaftet. Dadurch ist das Auftreten mechanischer Spannungen zwischen dem Werkzeug und dem Bauteil vermieden. Ferner ist zusätzlich der Verschleiß des Werkzeuges stark herabgesetzt, was eine erhöhte Lebensdauer des Werkzeugs zur Folge hat. Ferner ist ein aufwendiger Reinigungsprozess entbehrlich. Zusätzliche Einlagen zwischen dem Bauteil und der Wanne/dem Deckel sind entbehrlich. Das erfindungsgemäße Verfahren zum Herstellen eines Bauteils ist somit automatisiert, vereinfacht und hinsichtlich Reinigungsaufwand und Verschleiß erheblich verbessert.

Das Verfahren und die Vorrichtung der Erfindung können vorteilhaft im Rahmen eines RTM-Verfahrens ("Resin Transfer Molding", Harzinjektionsverfahren) eingesetzt werden.

Erfindungsgemäß können Kompositteile, zum Beispiel aus glasfaserverstärktem Kunststoff (GFK) oder aus kohlefaserverstärktem Kunststoff (CFK), in einem Werkzeug aus einer Nickel-Stahl-Legierung mit ausreichend geringem Nickelanteil gefertigt werden kann.

Bei einem entsprechenden Herstellungsverfahren wird zum Beispiel eine Fasermatte als Halbzeug zwischen Deckel und Wanne eingelegt. Der Bereich zwischen Deckel und Wanne kann dann fest verschlossen, erhitzt und unter Vakuum gesetzt werden. Es kann ein zusätzliches flüssiges Ausgangsmaterial (zum Beispiel Epoxidharz RTM6) durch Injektionslöcher in die Wanne eingespritzt werden. Bei Erhitzen auf eine Aushärtungstemperatur von zum Beispiel ungefähr 180 °C (allgemein auf eine Temperatur in einem Temperaturbereich von vorzugsweise zwischen 150 °C und 200 °C) härten die Ausgangsmaterialien zum Bilden des Bauteils aus. Nach Abkühlung von Vorrichtung und Bauteil kann nach Abnahme des Deckels das Bauteil leicht aus der Wanne herausgenommen werden, da aufgrund des erfindungsgemäßen Anpassens der Ausdehnungskoeffizienten von Wannenmaterial und Bauteilmaterial aufeinander ein unerwünschtes Aufschrumpfen des Bauteils auf die Wanne vermieden werden kann. So kann zum Beispiel per Hand oder mit einem einfachen Vakuumsauger das Bauteil zerstörungsfrei und mit geringem Kraftaufwand aus der Wanne herausgenommen werden, ohne dass Komponenten des Ausgangsmaterials an der Wanne oder dem Deckel anhaften bleiben. Dadurch ist der Reinigungsaufwand der Vorrichtung signifikant herabgesetzt.

Gemäß einem Ausführungsbeispiel der Erfindung ist ein zweiteiliges Werkzeug ohne Einsätze zur Fertigung von ebenen Kompositteilen unter Verwendung eines RTM-Verfahrens (Resin Transfer Molding) geschaffen. Somit können Kompositbauteile, zum Beispiel aus glasfaserverstärktem Kunststoff (GFK) oder aus kohlenstofffaserverstärktem Kunststoff (CFK), einfach und effizient hergestellt werden. Zum Beispiel können erfindungsgemäß Bauteile hergestellt werden, die in einem Luftfahrzeug (wie zum Beispiel einem Passagierflugzeug) Anwendung finden können, zum Beispiel für Beschläge. Ein anderer Vorteil der Erfindung ist darin zu sehen, dass bei Verwendung des erfindungsgemäßen Werkzeugs die Entnahme des Bauteils aus dem geöffneten Werkzeug problemlos möglich ist, zum Beispiel mit Hilfe eines einfachen Vakuumsaugers.

Zum Beispiel durch Verwendung einer Nickel-33-Kobalt-Stahl-Legierung (das heißt einer Legierung mit 33% Gewichtsanteil Nickel) als Werkzeugmaterial für die Wanne und ggf. für den Deckel ist es möglich, das Werkzeug ohne Einsätze zu gestalten, zum Beispiel für ebene Beschläge. Die Injektion des Harzes und das Absaugen des Harzes kann zum Beispiel in dem unteren formgebenden Teil der Vorrichtung (Wanne) zum Herstellen eines Bauteils integriert werden. Der obere formgebende Teil der Vorrichtung (Deckel) kann ebenfalls aus einem solchen Material hergestellt sein. Der Ausdehnungskoeffizient von Nickel-33-Kobalt-Stahl ist derart, dass sich ein CFK Bauteil beim Abkühlen nach dem Injektions- und Aushärteprozess von dem Werkzeug von selbst freischrumpft. Nach dem Abheben des Oberteils kann das Kompositbauteil mit Hilfe eines einfachen Vakuumsaugers ohne weiteren Kraftaufwand entnommen werden.

Die Vorrichtung gemäß der Erfindung kann nach dem Prozess einfach gereinigt werden. Denn bei dem erfindungsgemäßen Werkzeug bilden sich keine Hohlräume für Harzanhaftungen zwischen den Einsätzen , da keine Einsätze notwendig sind, und es sind geringe Spaltmaße zwischen Oberteil und Unterteil möglich. Somit ist erfindungsgemäß die Gefahr von mechanischen Beschädigungen der Vorrichtung beim Entformen sicher vermieden. Ein- und Austrittskanäle (für Harz) in Düsen, die zum Beispiel in dem Unterteil oder der Wanne vorgesehen sein können, sind so gestaltet, dass sie durch Ausschlagen von Harzresten von außen nach innen gesäubert werden können.

Erfindungsgemäß hergestellte Bauteile sind auch im Randbereich sauber, maßgenau und von Harzanreicherungen frei. Dadurch ist erfindungsgemäß die Werkzeugstandzeit und die Bauteilqualität erhöht, sowie die Zeiten und der Aufwand zum Aufrüsten, Entformen und Reinigen erheblich reduziert. Ein anderer Vorteil der Erfindung ist darin zu sehen, dass die erfindungsgemäße Technologie mit geringem Aufwand automatisierungsfähig ist.

Die erfindungsgemäße Vorrichtung eignet sich zum Beispiel zum Herstellen von Kompositbauelementen für Flugzeuge, zum Beispiel für ein Seitenleitwerk. Als Ausgangsmaterial zum Herstellen eines solchen Bauteils kann zum Beispiel eine Kohlenfasermatte verwendet werden, die bereits mit einer bestimmten Menge Harz vorgetränkt sein kann (zum Beispiel 5 Gewichtsprozent). Nach Einlegen der Kohlenfasermatte zwischen Wanne und Deckel kann dann durch eine Injektionseinrichtung vor oder während des Aushärtverfahrens zusätzliches Harzmaterial eingebracht werden, das sich mit dem Material der Kohlenfasermatte vermischt, um nach Erhitzen das Bauelement zu bilden. Die hierfür injizierte Harzmenge kann zum Beispiel bei 40% Gewichtsanteil liegen, wobei darin auch die Harzmenge aufgrund der Vortränkung der Kohlenfasermatte enthalten ist.

Als Material für die Wanne, und gegebenenfalls auch als Material für den Deckel, kann zum Beispiel eine Legierung verwendet werden, die 33 Gewichtsprozent Nickel, 4 Gewichtsprozent Kobalt, gegebenenfalls zusätzliche Materialen in geringen Mengen (zum Beispiel weniger als 0,01 Gewichtsprozent Kohlenstoff, weniger als 0,5 Gewichtsprozent Mangan und weniger als 0,4 Gewichtsprozent Silizium) aufweist, wobei der verbleibende Rest Stahl ist. Zum Beispiel kann eine Legierung aus Stahl und Nickel verwendet werden, wobei der Nickelanteil unterhalb von 36 Gewichtsprozent liegen kann, zum Beispiel zwischen ungefähr 30 und ungefähr 35 Gewichtsprozent. Optional kann eine geringe Menge Kobalt zugeführt werden, zum Beispiel zwischen 1 und 7 Gewichtsprozent.

Vorteilhaft kann der thermische Ausdehnungskoeffizient der Wanne (und gegebenenfalls auch des Deckels) bei der Aushärtungstemperatur von typischerweise 180 °C ähnlich zu dem Ausdehnungskoeffizient von Material zum Herstellen des Bauteils sein (zum Beispiel CFK, das heißt kohlenfaserverstärkter Kunststoff).

CFK hat einen Ausdehnungskoeffizienten von ungefähr 1.1·10⁻⁶ K⁻¹ bis 1.2·10⁻⁶ K⁻¹. Vorteilhaft kann das Material der Wanne (und gegebenenfalls des Deckels) einen thermischen Ausdehnungskoeffizienten in einem Bereich zwischen 1.1·10⁻⁶ K⁻¹ und 1.2·10⁻⁶ K⁻¹, vorzugsweise zwischen 1.0·10⁻⁶ K⁻¹ und 1.3·10⁻⁶ K⁻¹, aufweisen. Ein anderer geeigneter Bereich des Ausdehnungskoeffizienten der Wanne (und gegebenenfalls des Deckels) liegt zwischen 0.8·10⁻⁶ K⁻¹ und 1.8·10⁻⁶ K⁻¹ bei Aushärtungstemperatur.

Wird zum Beispiel die oben beschriebene Nickel-33-Kobalt-Stahl-Legierung verwendet, so hat diese bei Aushärtungstemperatur zum Beispiel einen Ausdehnungskoeffizienten von 1.5·10⁻⁶ K⁻¹. Geeignete Materialien für die Wanne (und gegebenenfalls für den Deckel) sind Pernifer-33Co, Superinvar oder Invar. Invar ist eine Eisen-Nickel-Legierung mit einem extrem niedrigen thermischen Ausdehnungskoeffizienten im Bereich der Raumtemperatur (etwa 10% des Koeffizienten von Stahl).

Exemplarische Weiterbildungen der Erfindung ergeben sich aus den abhängigen Ansprüchen.

Im Weiteren werden Ausgestaltungen der erfindungsgemäßen Vorrichtung zum Herstellen eines Bauteils beschrieben. Diese Ausgestaltungen gelten auch für die Anordnung und für das Verfahren zum Herstellen eines Bauteils.

Die Vorrichtung kann eine Injektionseinrichtung zum Einbringen von Ausgangsmaterial zum Herstellen des Bauteils zwischen der Wanne und dem Deckel in einem Zustand aufweisen, indem der Deckel auf die Wanne aufgesetzt ist. Im Rahmen eines RTM-Verfahrens wird zum Beispiel ein Halbzeug zwischen Wanne und Deckel eingesetzt und nachfolgend ein flüssiges Material durch Injektionsdüsen im Deckel oder in der Wanne injiziert, um bei einer hohen Verarbeitungstemperatur das Bilden eines Bauteils aus der festen Ausgangsmaterial und dem flüssigen Ausgangsmaterial zu erzielen.

Die Injektionseinrichtung kann in der Wanne vorgesehen (zum Beispiel integriert) sein. Alternativ kann die Injektionsvorrichtung auch in dem Deckel oder in Wanne und Deckel vorgesehen sein. Durch die Injektionseinrichtung kann Ausgangsmaterial in den Bereich zwischen Deckel und Wanne eingebracht werden, selbst in einem Betriebszustand, in dem Deckel und Wanne fest verschlossen sind, sodass der Bereich dazwischen abgedichtet ist.

Der Deckel der Vorrichtung ist aus einem Material mit einem Ausdehnungskoeffizienten hergestellt, der größer als der Ausdehnungskoeffizient des Materials der Wanne ist. Während Wanne und Ausgangsmaterial in etwa gleiche Ausdehnungskoeffizienten aufweisen sollen, um ein Aufschrumpfen des abkühlenden Bauteils an der Wanne nach Fertigstellung zu vermeiden, ist es vorteilhaft, den Deckel aus einem Material mit einem leicht erhöhten Ausdehnungskoeffizienten vorzusehen. Dies kann dazu führen, dass nach dem Abkühlen ein Abnehmen des Deckels einfacher möglich ist.

Insbesondere kann bei der Vorrichtung die Wanne und/oder der Deckel aus einem Material mit einem Ausdehnungskoeffizienten hergestellt sein, dass sich ein hergestelltes Bauteil von der Wanne und/oder von dem Deckel freischrumpft. Mit anderen Worten können die Materialien so gewählt werden, dass sich das fertiggestellte Bauteil nach Abkühlung automatisch von Deckel bzw. Wanne löst. Hierfür kann der Ausdehnungskoeffizient der Materialien entsprechend eingestellt werden. Es ist auch möglich, das Material des Bauteils identisch zu dem Material von Wanne bzw. Deckel zu wählen, weil dadurch automatisch sichergestellt ist, dass sich die Ausdehnungskoeffizienten von Werkzeug und Bauteil nicht signifikant unterscheiden, so dass ein unerwünschtes Aufschrumpfen beim Abkühlen vermieden ist.

Die Wanne und/oder der Deckel können aus einem Material mit einem Ausdehnungskoeffizienten hergestellt sein, der von einem Ausdehnungskoeffizienten von Ausgangsmaterial zum Herstellen des Bauteils weniger als 25%, vorzugsweise weniger als 10%, weiter vorzugsweise weniger als 5%, abweicht. Dadurch kann ein im Wesentlichen kraftloses Ablösen der fertiggestellten Bauteils aus dem Werkzeug ermöglicht werden.

Die Wanne und/oder der Deckel können aus Material mit einem Ausdehnungskoeffizienten von zwischen 1.0·10⁻⁶ K⁻¹ und 1.3·10⁻⁶ K⁻¹, vorzugsweise zwischen 1.1·10⁻⁶ K⁻¹ und 1.2·10⁻⁶ K⁻¹, hergestellt sein. Diese Ausdehnungskoeffizienten sind insbesondere vorteilhaft beim Herstellen eines Bauteils aus CFK-Material, das heißt aus einem kohlefaserverstärkten Kunststoff.

Der Deckel kann aus einem Material mit einem Ausdehnungskoeffizient hergestellt sein, der höchstens 0.2·10⁻⁶ K⁻¹, vorzugsweise höchstens 0.1·10⁻⁶ K⁻¹, größer ist als der Ausdehnungskoeffizient des Materials der Wanne. Bei dieser Kombination ist sichergestellt, dass ein Abnehmen des Deckels und ein nachfolgendes Herauslösen des Bauteils aus der Wanne ohne großen Kraftaufwand und Reinigungsaufwand möglich ist.

Die Wanne und/oder der Deckel können aus einer Nickel-Stahl-Legierung hergestellt sein. Insbesondere kann diese Nickel-Stahl-Legierung weniger als 36 Gewichtsprozent Nickel, vorzugsweise ungefähr 33 Gewichtsprozent Nickel, aufweisen. Die Nickel-Stahl-Legierung kann auch einen Kobalt-Anteil aufweisen, sodass sie dann als Nickel-Kobalt-Stahl -Legierung realisiert ist.

Im Weiteren werden Ausgestaltungen der erfindungsgemäßen Anordnung beschrieben. Diese gelten auch für die erfindungsgemäße Vorrichtung und für das erfindungsgemäße Verfahren.

Bei der Anordnung kann das Ausgangsmaterial zum Herstellen eines Bauteils direkt/unmittelbar zwischen die Wanne und dem Deckel einbringbar sein oder zumindest teilweise eingebracht sein. Das Vorsehen von Einsätzen zwischen Ausgangsmaterial einerseits und Deckel/Wanne andererseits ist erfindungsgemäß bei ebenen Bauteilen entbehrlich, da ein Anhaften des Bauteils nach dem Abkühlen aufgrund der Wahl der Ausdehnungskoeffizienten sicher vermieden ist.

Die Anordnung kann ferner eine Vakuumsaugeinrichtung enthalten, mit welcher ein fertig hergestelltes Bauteil nach Abnahme des Deckels aus der Anordnung entnehmbar ist. Hierfür kann zum Beispiel eine einfache Saugglocke oder auch eine Ansaugeinrichtung unter Verwendung einer mechanischen oder elektrischen Pumpe verwendet werden.

Im Weiteren werden Ausgestaltungen des erfindungsgemäßen Verfahrens beschrieben. Diese gelten auch für die Vorrichtung und die Anordnung.

Das Verfahren kann zum Herstellen eines Kompositbauteils ausgestaltet sein, insbesondere zur Verwendung des hergestellten Kompositbauteils in einem Flugzeug.

Ferner kann das Verfahren als Harzinjektionsverfahren, wie zum Beispiel als RTM-Verfahren ("Resin Transfer Molding") hergestellt sein. Das Verfahren kann ausgestaltet sein zum Herstellen eines Bauteils aus glasfaserverstärktem Kunststoff (GFK) oder aus kohlenfaserverstärktem Kunststoff (CFK).

Das Heizen der erfindungsgemäßen Form ist durch verschiedene Prozesse möglich: Es kann zum Beispiel mit einem Ofen oder Autoklav (dann ist ein zusätzlicher Schließrahmen mit Klammerschrauben oder Verschraubungen am Werkzeug erforderlich) durchgeführt werden, was zu einer druckkräftestabilen Werkzeug-Gestaltung führt. Es kann auch eine Heizpresse eingesetzt werden (dies entspricht einer minimalistischen Werkzeug-Geometrie, Kräfte werden von der Presse aufgenommen, dann sind keine Angüsse oder Absaugungen an Unter/ Oberseite erlaubt). Oder es kann eine Eigenbeheizung zum Bespiel durch einen elektrischen Widerstand (Haarföhnprinzip) oder durch thermalölgefüllte Kanäle im Werkzeug implementiert werden.

Ausführungsbeispiele der Erfindung sind in den Figuren dargestellt und werden im Weiteren näher erläutert.

Es zeigen:
- Figur 1 bis Figur 5: eine Anordnung zum Herstellen eines Kompositbauteils gemäß einem Ausfuhrungsbeispiel der Erfindung in unterschiedlichen Betriebszuständen,
- Figur 6: eine Vorrichtung zum Herstellen eines Kompositbauteils gemäß einem anderen Ausführungsbeispiel der Erfindung,
- Figuren 7A bis 7D: Darstellungen von erfindungsgemäß hergestellten und in einem Flugzeug implementierten Kompositbauteilen,
- Figur 8: eine Draufsicht eines RTM-Werkzeugs,
- Figuren 9 bis 11: unterschiedliche Ansichten einer Preform-Vorrichtung zum Herstellen eines Kompositbauteils gemäß einem anderen Ausführungsbeispiel der Erfindung,
- Figuren 12 bis 16: unterschiedliche Ansichten der in Figur 6 gezeigten Vorrichtung zum Herstellen eines Kompositbauteils gemäß einem Ausführungsbeispiel der Erfindung.

Gleiche oder ähnliche Komponenten in unterschiedlichen Figuren sind mit gleichen Bezugsziffern versehen. Die Darstellungen in den Figuren sind schematisch und nicht maßstäblich.

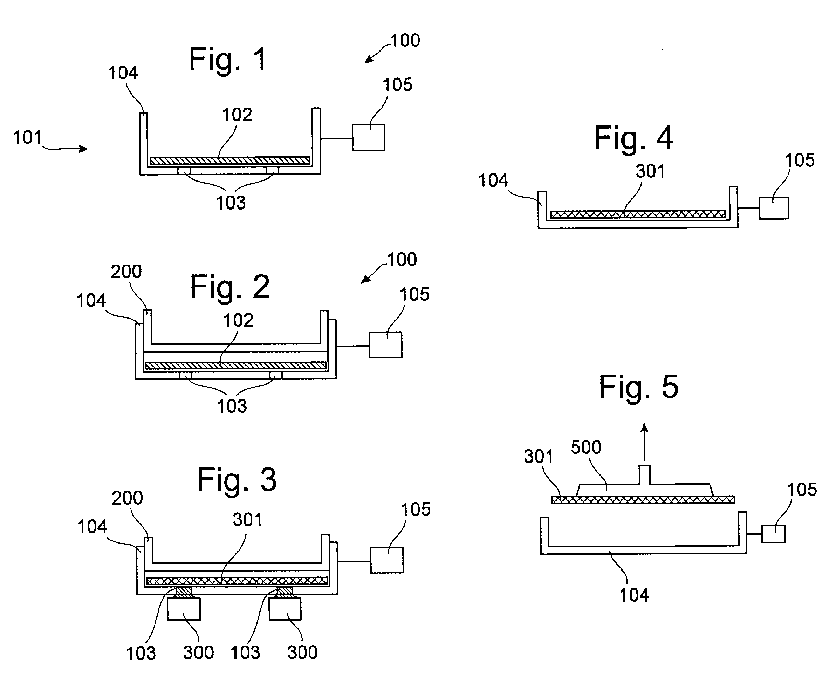

Im Weiteren wird bezugnehmend auf Fig. 1 bis Fig. 5 eine Anordnung 100 zum Herstellen eines Kompositbauteils 301 gemäß einem Ausführungsbeispiel der Erfindung beschrieben.

**Fig. 1** zeigt die Anordnung 100 zum Herstellen eines Kompositbauteils unter Verwendung eines RTM-Verfahrens (Resin Transfer Molding).

Die Anordnung 100 enthält eine Vorrichtung 101 zum Herstellen des Kompositbauteils und eine Kohlefasermatte 102.

Die Kohlenfasermatte 102 dient als Ausgangsmaterial oder Halbzeug zum Herstellen eines CFK-Kompositbauteils, wie im Weiteren beschrieben wird.

In Fig. 1 sind ferner Injektionsdüsen 103 in einer Metallwarme 104 gezeigt, mittels welcher in nachfolgenden Verfahrensschritten Harzmaterial in einen Raum zwischen der Wanne 104 und einem im Weiteren beschriebenen Deckel injiziert werden kann, so dass sich injiziertes Harzmaterial mit der Kohlenfasermatte 102 vermischen kann. Wie in Fig. 1 gezeigt, ist die Kohlenfasermatte 102 als Ausgangsmaterial zum Herstellen eines Kompositmaterials in die Wanne 104 eingelegt.

Ferner ist in Fig. 1 eine Heizung 105 zum Erhitzen der Wanne 104 und eines im Weiteren beschriebenen Deckels gezeigt, welche Heizung 105 in einem späteren Verfahrensschritt zum Herstellen des Kompositbauteils mittels Heizens der Ausgangsmaterialien auf eine vorgebbare Aushärtungstemperatur verwendet wird.

Im Weiteren wird bezugnehmend auf **Fig. 2** die Anordnung 100 in einem nachfolgenden Verfahrenszustand während des Herstellens eines Kompositbauteils beschrieben.

In dem in Fig. 2 gezeigten Betriebszustand ist auf die mit der Kohlenfasermatte 102 versehene Wanne 105 ein Deckel 200 aufgesetzt, so dass die Kohlenfasermatte 102 zum nachfolgenden Herstellen des Kompositbauteils zwischen der Wanne 104 und dem Deckel 200 luftdicht eingeschlossen ist. Die Wanne 104 und der Deckel 200 sind formgebende Elemente, so dass die geometrische Struktur des durch die Wanne 104 und den Deckel 200 eingeschlossenen Hohlraums die Form des herzustellenden Kompositbauteils determiniert.

Die Wanne 200 ist aus einer Nickel-Stahl-Kobalt-Legierung hergestellt, die bei einer Aushärtungstemperatur von 180 °C zum Herstellen des Kompositbauteils einen Ausdehnungskoeffizienten von 1,15·10⁻⁶ K⁻¹ hat. Die Kohlefasermatte 102 hat bei einer Aushärtungstemperatur von 180 °C ebenfalls einen linearen thermischen Ausdehnungskoeffizienten von ungefähr 1,15·10⁻⁶ K⁻¹. Der Deckel 200 ist aus einer Nickel-Kobalt-Stahl-Legierung hergestellt, die einen Ausdehnungskoeffizienten von leicht oberhalb 1,15·10⁻⁶ K⁻¹ aufweist.

Wie in **Fig. 3** gezeigt, werden Injektionsaufsätze 300 in die Injektionsdüsen 103 der Wanne 104 eingesetzt, um flüssiges Epoxidharz zur Durchmischung mit der Kohlenfasermatte 102 in den von der Wanne 104 und dem Deckel 200 abgedichteten Raum zu injizieren.

Die mit Epoxidharz getränkte Kohlenfasermatte 102 wird mittels der Heizung 105 auf ungefähr 180°C erhitzt, wodurch es zu einer Aushärtung der mit Epoxidharz getränkten Kohlenfasermatte 102 und somit zum Bilden eines CFK-Strukturbauteils 301 kommt.

Nach Abkühlen der in Fig. 3 gezeigten Apparatur auf eine Temperatur in der Nähe von Raumtemperatur wird der Deckel 200 abgenommen, womit die Oberseite des CFK-Strukturbauteils 301 (kohlenstofffaserverstärkter Kunststoff) freigelegt wird (siehe **Fig. 4**).

Da der Ausdehnungskoeffizient des Materials der Wanne 104 von dem des CFK-Strukturbauteils 301 nicht oder nur unwesentlich unterschiedlich ist, schrumpft das CFK-Strukturbauteil 301 beim Abkühlen nicht an der Wanne 104 fest. Ferner ist anzumerken, dass aufgrund des Ausdehnungskoeffizienten des Deckels 200, der nur geringfügig größer ist als jener der Wanne 104 und des CFK-Strukturbauteils 301, der Deckel 200 abnehmbar ist, ohne dass es zu einem Festkleben oder Festschrumpfen des CFK-Strukturbauteils 301 an dem Deckel 200 kommen würde, und ohne dass der Deckel auf der Kavität verklemmt.

Wie in **Fig. 5** gezeigt, kann mittels einer einfachen Saugvorrichtung 302 (zum Beispiel eine Vakuumpumpe mit einer Ansaugfläche) das CFK-Strukturbauteil 301 aus der Wanne 104 entfernt bzw. abgelöst werden.

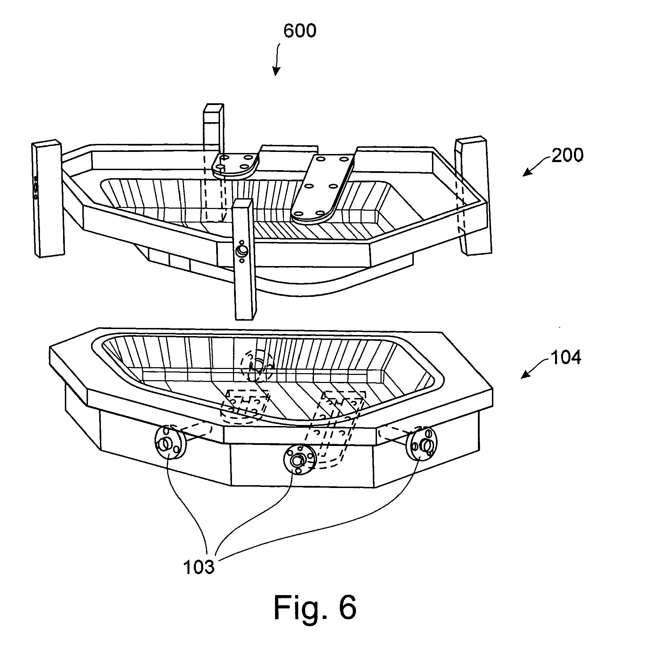

Im Weiteren wird bezugnehmend auf **Fig. 6** eine RTM-Vorrichtung 600 zum Herstellen eines Strukturbauteils mittels eines RTM-Verfahrens (Resin Transfer Molding) gemäß einem exemplarischen Ausführungsbeispiel der Erfindung beschrieben.

Die RTM-Vorrichtung 600 ähnelt der Vorrichtung 101 aus den Fig. 1 bis Fig. 5. Allerdings ist in Fig. 6 eine dreidimensionale Darstellung dieses Werkzeugs als Vorrichtung zum Bilden eines dreidimensionalen Kompositbauteils gezeigt. Fig. 6 zeigt eine auseinandergenommene Explosionsdarstellung der RTM-Vorrichtung 600, bei der ein Deckel 200 getrennt von einer Wanne 104 gezeigt ist.

Um ein Strukturbauteil herzustellen, wird nach Einlegen einer Kohlenfasermatte in die Wanne 104 der Deckel 200 abgesenkt, um einen abgedichteten Hohlraum zwischen Deckel 200 und Wanne 104 zu bilden, in welchen die Kohlenfasermatte eingebettet ist. Nachfolgend wird durch Injektionsdüsen 103 flüssiges Epoxidharzmaterial in den Hohlraum zwischen Deckel 200 und Wanne 104 eingespritzt, wodurch sich das flüssige Epoxidharz mit der Kohlenfasermatte 102 vermischt. Durch Tempern der Anordnung wird aus der Kohlenfasermatte 102, die mit dem Epoxidharz getränkt ist, ein Strukturbauteil gebildet.

Aufgrund der Materialwahl von Wanne 104, Deckel 200 und den Ausgangsmaterialien zum Bilden des Strukturbauteils ist ein Festschrumpfen des Strukturbauteils an Wanne 104 bzw. Deckel 200 sicher vermieden.

Nachfolgend kann der Deckel 200 abgenommen werden und das erzeugte Strukturbauteil aus der Wanne 104 entnommen werden.

Ein geeignetes Material für die Wanne 104 bzw. für den Deckel 200 ist Fe-33Ni-4.5Co. Dieses Material hat im Temperaturbereich zwischen -50 °C und +200 °C eine sehr geringe thermische Ausdehnung und wird deswegen auch als Superinvar™ Material bezeichnet. Der lineare thermische Expansionskoeffizient (in 10⁻⁶ °C⁻¹) von Superinvar™ beträgt 0,45 bei 100 °C, 1,15 bei 200 °C, 3,75 bei 300 °C, 6,70 bei 400 °C, 8.75 bei 500 °C und 10.15 bei 600 °C.

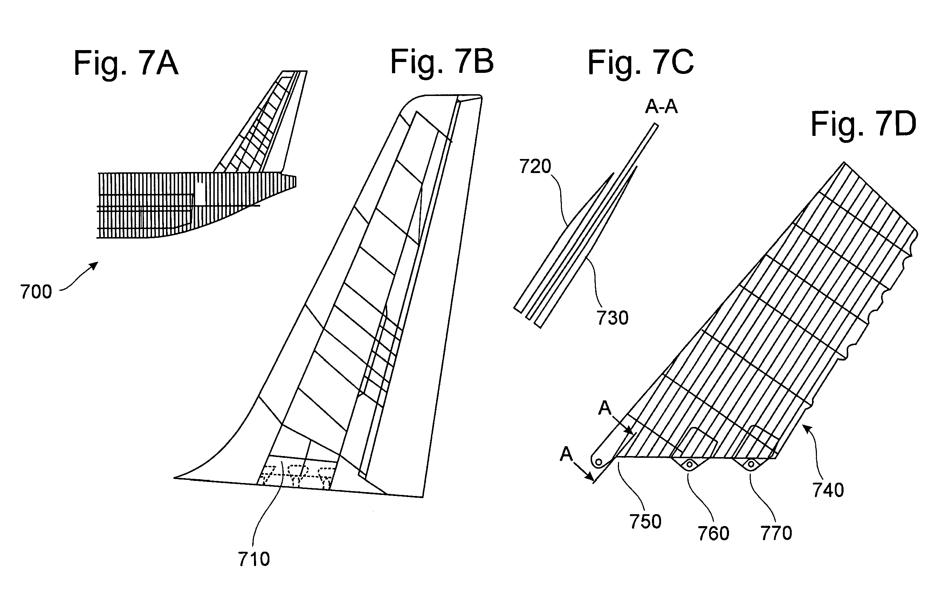

Fig. 7A bis Fig. 7D zeigen exemplarisch ein Einsatzgebiet für erfindungsgemäß hergestellte Kompositbauelemente, nämlich für an einem Flugzeug vorgesehene Beschläge.

**Fig. 7A** zeigt ein Hinterteil eines Flugzeugs 700. **Fig. 7B** zeigt einen Mittelkasten mit Rumpfanschlussbeschlägen 710. **Fig. 7C** zeigt einen äußeren Beschlag 720 und einen inneren Beschlag 730. **Fig. 7D** zeigt eine Seitenschale 740 mit einem vorderen Längskraftbeschlag 750, mit einem mittleren Längskraftbeschlag 760 und mit einem hinteren Längskraftbeschlag 770.

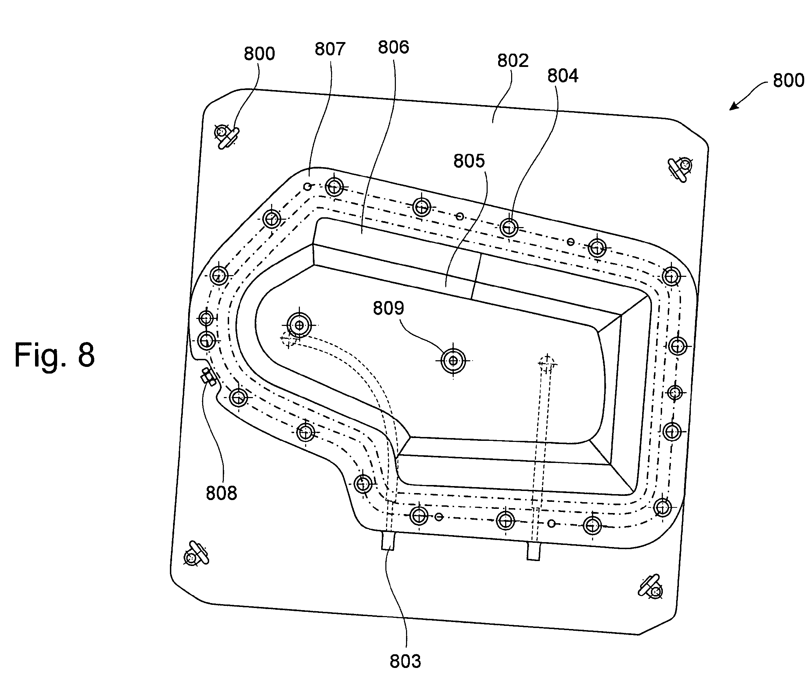

Im Weiteren wird bezugnehmend auf **Fig. 8** eine Draufsicht eines RTM-Werkzeugs 800 beschrieben.

Fig. 8 zeigt ein Anschlagmittel 801 auf einem Vorrichtungsträger 802. Ferner ist ein Thermoelement 803 zur Temperaturüberwachung bereitgestellt. Fig. 8 zeigt darüber hinaus Deckelschrauben 804, Formleisten 805, Keilleisten 806 und eine untere Kavität 807. An einem Injektionsanschluss 808 ist Harz zuführbar. Zugeführtes Harz tritt an einer Harzaustrittstelle 809 aus und kann sich dort mit einer Fasermatte vermischen.

Im Weiteren wird ein exemplarisches Verfahren zum Herstellen eines Bauteils beschrieben.

Faserhalbzeuge werden zunächst mit einem Ultraschallcutter zugeschnitten. Die losen Zuschnitte werden dann per Hand in eine Preformvorrichtung aus Aluminium eingelegt. Unter einer Vakuummatte werden die Lagenzuschnitte im Solarium bei ca. 60° C zu einem Vorformling gebacken (früher wurden die Zuschnitte direkt in die RTM-Vorrichtung gelegt). Das Verbundteil wird dann in das Fertigungsmittel eingelegt. Die RTM-Vorrichtung wird vakuum- und druckdicht verriegelt und die Druckschläuche für die Injektion und den Austritt des Harzes angeschlossen. Das flüssige Harz wird mit Druck in die unter Vakuum stehende RTM-Vorrichtung injiziert. Die Injektionstemperatur beträgt 130 °C bis 145 °C. Der Injektionsdruck liegt zwischen 1,0 bar und 4,0 bar, wobei ein Nachdruck von bis 7,0 bar aufgeprägt wird. Die Injektionsdauer ist 45 Minuten. Bei einer Temperatur von 180 °C wird das flüssige Harz in den festen Zustand überführt. Das Aushärten dauert etwa 1,5 Stunden. Anschließend wird die Fertigungsmitteltemperatur von 180 °C auf unter 50 °C gesenkt und das Bauteil entformt. Die Qualitätssicherung des gefertigten Bauteils erfolgt in vier Stufen: Sichtprüfung nach dem Entformen, Ultraschallprüfung auf einer Squaiteranlage, Ultraschallhandprüfung und eine abschließende Endprüfung. Nach der mechanischen Bearbeitung, dem Einbringen von Bohrungen und Fräsungen, sind die Bauteile versandfertig.

Im Folgenden wird ein Herstellungsprinzip für ebene Flugbauteile aus CFK im RTM-Verfahren gemäß einem anderen Ausführungsbeispiel der Erfindung beschrieben.

Zwei Besonderheiten dieses Konzepts sind die Preformfertigung (Vorkomprimierung der Lagenzuschnitte) und die eingesetzte Vorrichtung zum Herstellen der Flugbauteile, die ohne Einlegekerne auskommt (durch Einsatz eines neuen Werkstoffes für die Vorrichtung, Ni33Co, können die bisher erforderlichen Einlegekerne komplett entfallen).

Für die Herstellung eines Vorformlings wird eine Preform aus Aluminium eingesetzt. Auf der Preform werden die harzhaltigen CFK-Lagenzuschnitte unter einer Vakuummatte im Solarium bei ca. 50°C gebacken, so dass ein Verbundteil entsteht, welches dann in der RTM-Vorrichtung. weiterverarbeitet wird. Die Preform sollte nirgendwo scharfe Kanten haben, da sonst die Vakuummatte im Solarium beschädigt wird. In der Preform werden von unten zwei Thermoelemente integriert, wobei der Stecker nicht über die Preformkontur herausragen soll, da er ansonsten von der Vakuummatte abgeknickt werden kann. Die seitliche Kontur wird durch ein festes und ein zum Entformen abnehmbares, auf zwei Stiften geführten Ringteil abgebildet.

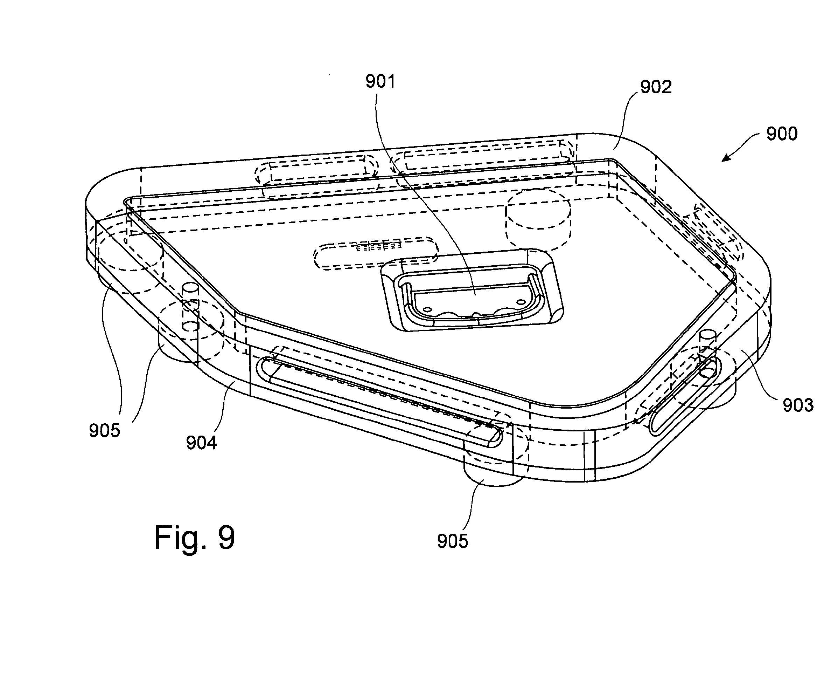

Im Weiteren werden bezugnehmend auf Fig. 9 bis Fig. 11 unterschiedliche Ansichten einer Preform-Vorrichtung 900 zum Herstellen eines Kompositbauteils gemäß einem Ausführungsbeispiel der Erfindung beschrieben.

**Fig. 9** zeigt eine räumliche Ansicht der einen Griff 901 aufweisenden Preform-Vorrichtung 900 in geschlossenem Zustand.

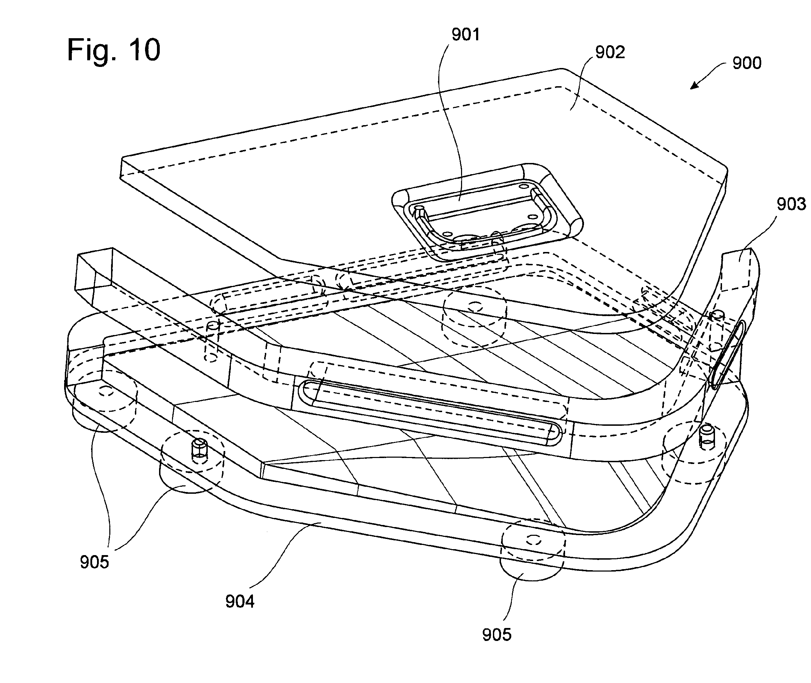

**Fig. 10** zeigt eine räumliche Ansicht der Preform-Vorrichtung 900 mit abgenommenem Deckel 902.

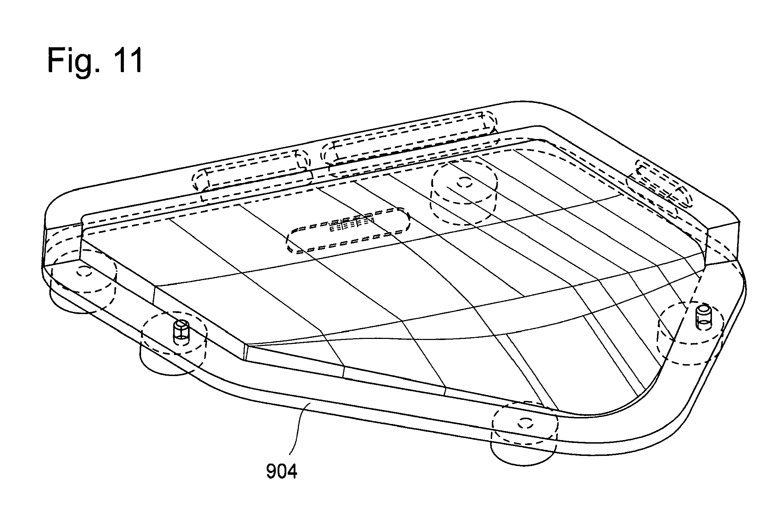

**Fig. 11** zeigt eine räumliche Ansicht der Preform-Vorrichtung 900 mit abgenommenem Ringaufsatz 903.

Die Preform 900 enthält ein Unterteil 904, einen Ringaufsatz 903 und einen Deckel 902. Die Bauteilkontur wird im Unterteil 904 und im Deckel 902 abgebildet. Der Ringaufsatz 903 ist abnehmbar vorgesehen, zum besseren Entnehmen des Vorformlings (Abstecker oder Stifte können als Zentrierung eingesetzt werden). Thermoelemente können im Unterteil 904 integriert werden. Ferner können Teflonfüße 905 vorgesehen werden. Der Deckelgriff 901 kann einklappbar ausgebildet sein. Die Gewichte der Preform 900 können ca. 4,7 kg für das Unterteil 904, ca. 1,6 kg für festen Ring, ca. 1,8 kg für losen Ring und ca. 4,5 kg für den Deckel 902 sein, was zu einem Gesamtgewicht von ca. 11,6 kg führen kann.

Für die Herstellung von CFK-Bauteilen im RTM-Verfahren benötigt man eine Vorrichtung, in der die CFK-Lagen kontrolliert platziert und unter Vakuum gesetzt werden können. Unter Temperatur und Druck wird dann das Harz eingespritzt. Nach dem Aushärten des Harzes kann das Bauteil entnommen werden. Das RTM-Verfahren ermöglicht bei geeignetem Werkzeugmaterial eine Endmaßfertigung der Bauteile.

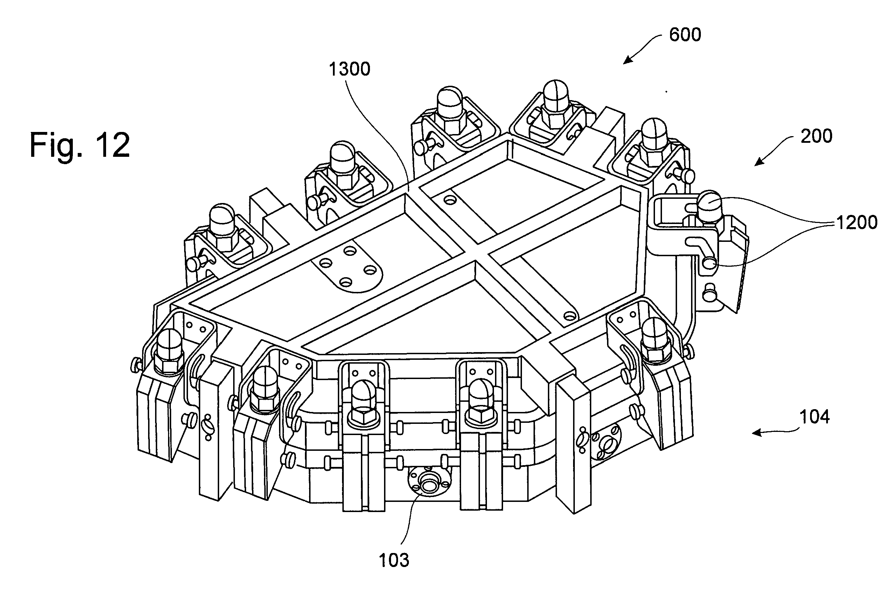

Fig. 12 bis Fig. 16 zeigen unterschiedliche Ansichten der in Fig. 6 gezeigten Vorrichtung 600 zum Herstellen eines Kompositbauteils gemäß einem Ausführungsbeispiel der Erfindung.

**Fig. 12** zeigt eine räumliche Ansicht der Klammerschrauben 1200 aufweisenden Vorrichtung 600 in geschlossenem Zustand.

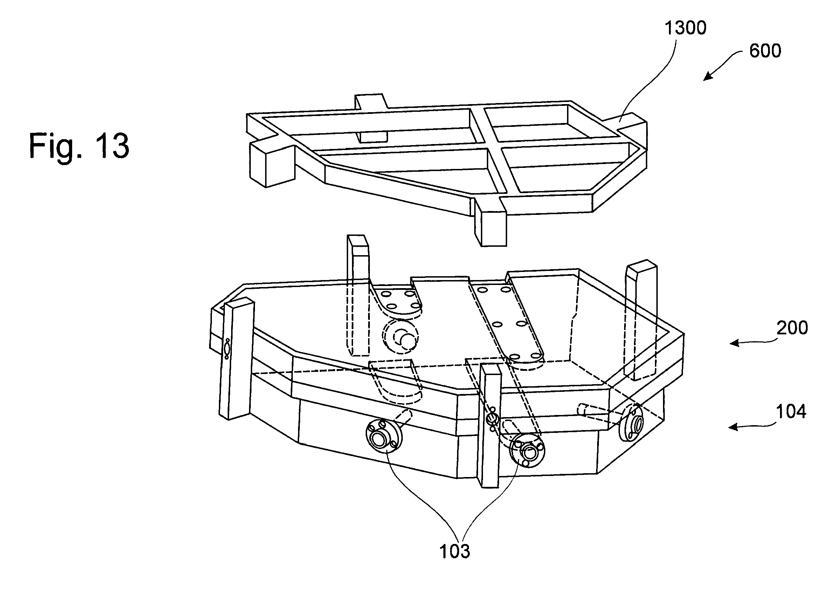

**Fig. 13** zeigt eine räumliche Ansicht der Vorrichtung 600 mit einer Rahmenzentrierung 1300 über dem Deckel 200.

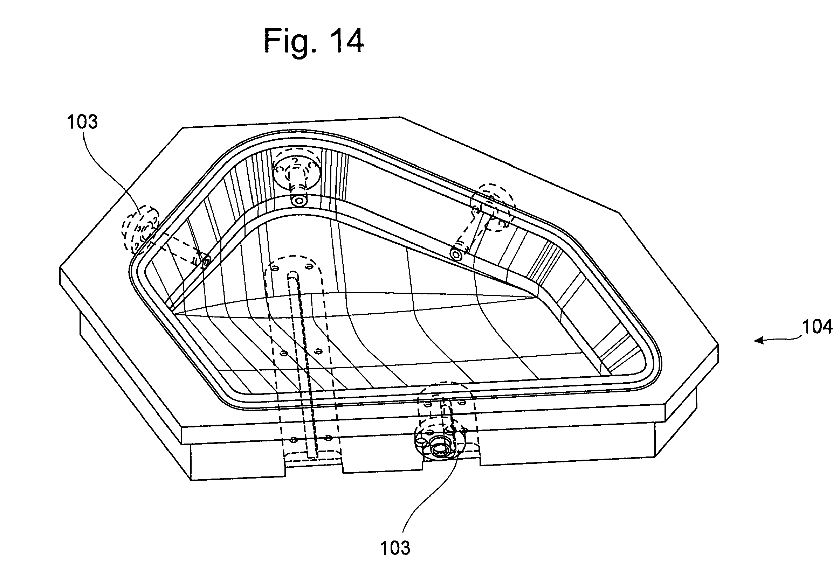

**Fig. 14** zeigt eine räumliche Ansicht der Wanne 104 als Kavität mit Angussspalt an der Tauchkante.

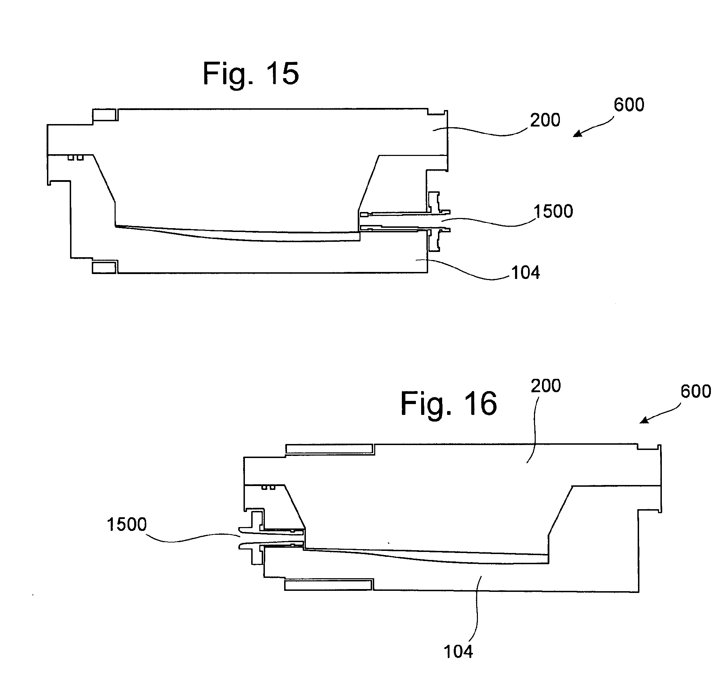

**Fig. 15** und **Fig. 16** zeigt Querschnittsansichten der Vorrichtung 600 in geschlossenem Zustand mit Anguss und einer Absaugeinrichtung 1500.

Gemäß einem exemplarischen Ausführungsbeispiel enthält die Vorrichtung 600 nur die Kavität 104, den Deckel 200 und einen Rahmen. Auf Einlegekerne kann verzichtet werden, da das Werkzeugmaterial (Ni33Co) beim Abkühlen nicht auf das Bauteil aufschrumpft. Der Spalt zwischen Deckel 200 und Kavität 104 im Bereich der Tauchkante sollte im Bereich von 0,1 bis 0,3 mm liegen und zu den Angüssen hin größer werden. Drei Angüsse und eine Absaugung können vorgesehen sein. Injektions- und Absaugdüsen sollten so gestaltet sein, dass Harzreste von außen entfernt werden können (Durchschlagen). Zentriereinheiten sollten am Deckel 200 vorgesehen sein und sollten gleichzeitig den Rahmen zentrieren und als Aufsetzschutz für den Deckel 200 dienen. Der Rahmen sollte mit Klammerschrauben 1200 für eine Ofenfertigung vorgesehen sein. Eine Doppeldichtung in der Kavität 104 ist vorteilhaft. Thermoelemente können zur Prozessüberwachung vorgesehen sein.

Die beschriebene Technologie hat die folgenden Vorteile: Mit der Preformfertigung ist eine Optimierung der Bauteilqualität möglich, da weniger Lufteinschlüsse auftreten. Ferner ist eine Minimierung der Ausschussteile durch fehlerhaften Lagenaufbau oder Verrutschen der Lagen im RTM-Werkzeug erreichbar. Die Technologie ist automatisierungsfähig. Mit dem Ni33Co-RTM-Werkzeug ohne Einlegekerne ist eine wesentliche Vereinfachung der Werkzeug-Beschickung und Entformung ermöglicht. Ferner resultiert eine erhebliche Vereinfachung des Reinigungsaufwandes. Eine heizpressentaugliche Fertigung ist ermöglicht. Eine Erhöhung der Werkzeugstandzeiten ist durch Verschleißreduktion realisiert. Die Technologie ist automatisierungsfähig.

Durch Kombination der beiden Verfahren (Preformen und RTM) kann eine erhebliche Kosteneinsparung bei der RTM-Fertigung ebener Beschlagteile erreicht werden. Das Verfahren ist ausgesprochen geeignet eine für Automatisierung (Fertigungslinien etc.)

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Anordnung
- 101: Vorrichtung
- 102: Kohlefasermatte
- 103: Injektionsdüsen
- 104: Wanne
- 105: Heizung
- 200: Deckel
- 300: Injektionsaufsätze
- 301: CFK-Strukturbauteil
- 500: Saugvorrichtung
- 600: RTM-Vorrichtung
- 700: Flugzeug
- 710: Rumpfanschlussbeschläge
- 720: äußerer Beschlag
- 730: innerer Beschlag
- 740: Seitenschale
- 750: vorderer Längskraftbeschlag
- 760: mittlerer Längskraftbeschlag
- 770: hinterer Längskraftbeschlag
- 800: RTM-Werkzeug
- 802: Vorrichtungsträger
- 803: Thermoelement
- 804: Deckelschraube
- 805: Formleisten
- 806: Keilleisten
- 807: untere Kavität
- 808: Injektionsanschluss
- 809: Harzaustrittstelle
- 900: Preform
- 901: Griff
- 902: Deckel
- 903: Ringaufsatz
- 904: Unterteil
- 905: Teflonfüße
- 1200: Klammerschrauben
- 1300: Rahmenzentrierung
- 1500: Absaugeinrichtung

## Patentansprüche

1. Resin-Transfer-Molding-Vorrichtung (101) zum Herstellen eines Bauteils (301), aufweisend:
- eine Wanne (104), in die Ausgangsmaterial zum Herstellen des Bauteils (301) einbringbar ist;
- einen Deckel (200), der auf die Wanne (104) derart einsetzbar ist, dass Ausgangsmaterial zum Herstellen des Bauteils (301) zwischen der Wanne (104) und dem Deckel (200) einschließbar ist;
- eine Heizeinrichtung (105) zum Herstellen des Bauteils (301) mittels Heizens von zwischen der Wanne (104) und dem Deckel (200) einschließbarem Ausgangsmaterial (102);
wobei die Wanne (104) aus einem Material mit einem Ausdehnungskoeffizienten hergestellt ist, der im Wesentlichen gleich einem Ausdehnungskoeffizienten von dem hergestellten Bauteil (301) ist; und
der Deckel (200) aus einem Material mit einem Ausdehnungskoeffizienten hergestellt ist, der größer als der Ausdehnungskoeffizient des Materials der Wanne (104) ist; und
wobei, die Wanne und Bauteil in etwa gleiche Ausdehnungskoeffizienten aufweisen um ein Aufschrumpfen des abkühlenden Bauteils an der Wanne nach Fertigstellung zu vermeiden, der Deckel aus dem Material mit dem größeren Ausdehnungskoeffizienten dazu führt, dass nach dem Abkühlen ein Abnehmen des Deckels einfacher möglich ist.

2. Resin-Transfer-Molding-Vorrichtung (101) nach Anspruch 1, mit:
- einer Injektionseinrichtung (103, 300) zum Einbringen von Ausgangsmaterial zum Herstellen des Bauteils (301) zwischen der Wanne (104) und dem Deckel (200) in einem Zustand der Vorrichtung (101), in dem der Deckel (200) auf die Wanne (104) aufgesetzt ist.

3. Resin-Transfer-Molding-Vorrichtung (101) nach Anspruch 1 oder 2, bei der die Injektionseinrichtung (103) in der Wanne (104) vorgesehen ist.

4. Vorrichtung (101) nach einem der Ansprüche 1 bis 3,
wobei die Wanne (104) und/oder der Deckel (200) aus einem Material mit einem derartigen Ausdehnungskoeffizienten hergestellt ist oder sind, dass sich ein Bauteil (301) von der Wanne (104) und/oder von dem Deckel (200) nach der Herstellung freischrumpft.

5. Resin-Transfer-Molding-Vorrichtung (101) nach einem der Ansprüche 1 bis 4,
wobei die Wanne (104) und/oder der Deckel (200) aus einem Material mit einem Ausdehnungskoeffizienten hergestellt ist, der von einem Ausdehnungskoeffizienten von Ausgangsmaterial zum Herstellen des Bauteils (301) weniger als 25% abweicht.

6. Resin-Transfer-Molding-Vorrichtung (101) nach einem der Ansprüche 1 bis 5,
wobei die Wanne (104) und/oder der Deckel (200) aus einem Material mit einem Ausdehnungskoeffizienten hergestellt ist, der von einem Ausdehnungskoeffizienten von Ausgangsmaterial zum Herstellen des Bauteils (301) weniger als 10% abweicht.

7. Resin-Transfer-Molding-Vorrichtung (101) nach einem der Ansprüche 1 bis 6,
wobei die Wanne (104) und/oder der Deckel (200) aus einem Material mit einem Ausdehnungskoeffizienten von zwischen 1.0·10⁻⁶ K⁻¹ und 1.3·10⁻⁶ K¹ hergestellt ist.

8. Resin-Transfer-Molding-Vorrichtung (101) nach einem der Ansprüche 1 bis 7,
wobei die Wanne (104) und/oder der Deckel (200) aus einem Material mit einem Ausdehnungskoeffizienten von zwischen 1.1·10⁻⁶ K¹ und 1.2·10⁻⁶ K¹ hergestellt ist.

9. Resin-Transfer-Molding-Vorrichtung (101) nach Anspruch 7 oder 8,
bei welcher der Deckel (200) aus einem Material mit einem Ausdehnungskoeffizienten hergestellt ist, der größer, aber höchstens 0.2·10⁻⁶ K⁻¹ größer ist als der Ausdehnungskoeffizient des Materials der Wanne (104).

10. Resin-Transfer-Molding-Vorrichtung (101) nach einem der Ansprüche 7 bis 9,
bei welcher der Deckel (200) aus einem Material mit einem Ausdehnungskoeffizienten hergestellt ist, der größer, aber höchstens 0.1·10⁻⁶ K⁻¹ größer ist als der Ausdehnungskoeffizient des Materials der Wanne (104).

11. Resin-Transfer-Molding-Vorrichtung (101) nach einem der Ansprüche 1 bis 10,
wobei die Wanne (104) und/oder der Deckel (200) aus einer Nickel-Stahl-Legierung hergestellt ist oder sind.

12. Resin-Transfer-Molding-Vorrichtung (101) nach Anspruch 11,
wobei die Wanne (104) und/oder der Deckel (200) aus einer Nickel-Stahl-Legierung mit weniger als 36 Gewichtsprozent Nickel hergestellt ist oder sind.

13. Resin-Transfer-Molding-Vorrichtung (101) nach Anspruch 11 oder 12,
wobei die Wanne (104) und/oder der Deckel (200) aus einer Nickel-Stahl-Legierung mit ungefähr 33 Gewichtsprozent Nickel hergestellt ist oder sind.

14. Resin-Transfer-Molding-Vorrichtung (101) nach Anspruch 12 oder 13,
- wobei die Wanne (104) und/oder der Deckel (200) aus einer Nickel-Stahl-Kobalt-Legierung hergestellt ist oder sind.

15. Resin-Transfer-Molding-Vorrichtung (101) nach einem der Ansprüche 1 bis 14,
- wobei die Wanne (104) aus einem Material mit einem Ausdehnungskoeffizienten hergestellt ist, der geringfügig kleiner als ein Ausdehnungskoeffizient von Ausgangsmaterial (102) zum Herstellen des Bauteils (301) ist.

16. Resin-Transfer-Molding-Vorrichtung (101) nach einem der Ansprüche 1 bis 15,
wobei die Wanne (104) aus einem Material mit einem Ausdehnungskoeffizienten hergestellt ist, der höchstens 5% kleiner als ein Ausdehnungskoeffizient von Ausgangsmaterial (102) zum Herstellen des Bauteils (301) ist.

17. Resin-Transfer-Molding-Anordnung (100) zum Herstellen eines Bauteils (301), aufweisend:
- eine Resin-Transfer-Molding-Vorrichtung (101) zum Herstellen eines Bauteils (301) nach einem der Ansprüche 1 bis 16;
- Ausgangsmaterial (102) zum Herstellen des Bauteils (301), das in die Wanne (104) der Resin-Transfer-Molding-Vorrichtung (101) einbringbar ist oder zumindest teilweise in die Wanne (104) eingebracht ist.

18. Resin-Transfer-Molding-Anordnung (100) nach Anspruch 17,
bei dem Ausgangsmaterial (102) zum Herstellen des Bauteils (301) direkt zwischen die Wanne (104) und den Deckel (200) einbringbar ist oder zumindest teilweise eingebracht ist.

19. Resin-Transfer-Molding-Anordnung (100) nach Anspruch 17 oder 18, mit:
- einer Vakuumsaugeinrichtung (500), mit welcher ein hergestelltes Bauteil (301) nach Abnahme des Deckels (200) aus der Anordnung (100) entnehmbar ist.

20. Resin-Transfer-Molding-Verfahren zum Herstellen eines Bauteils (301), wobei bei dem Resin-Transfer-Molding-Verfahren:
- Ausgangsmaterial (102) zum Herstellen des Bauteils (301) in eine Wanne (104) eingebracht wird;
- ein Deckel (200) auf die Wanne (104) derart eingesetzt wird, dass das Ausgangsmaterial (102) zum Herstellen des Bauteils (301) zwischen der Wanne (104) und dem Deckel (200) eingeschlossen wird;
- das zwischen der Wanne (104) und dem Deckel (200) eingeschlossene Ausgangsmaterial (102) erhitzt wird, womit das Bauteil (301) hergestellt wird;
wobei die Wanne (104) aus einem Material mit einem Ausdehnungskoeffizienten hergestellt ist, der im Wesentlichen gleich einem Ausdehnungskoeffizienten des hergestellten Bauteils (301) ist; und
der Deckel (200) aus einem Material mit einem Ausdehnungskoeffizienten hergestellt ist, der größer als der Ausdehnungskoeffizient des Materials der Wanne (104) ist; und
wobei, die Wanne und Bauteil in etwa gleiche Ausdehnungskoeffizienten aufweisen, um ein Aufschrumpfen des abkühlenden Bauteils an der Wanne nach Fertigstellung zu vermeiden, der Deckel aus dem Material mit dem größeren Ausdehnungskoeffizienten dazu führt, dass nach dem Abkühlen ein Abnehmen des Deckels einfacher möglich ist.

21. Resin-Transfer-Molding-Verfahren nach Anspruch 20, ausgestaltet als Resin-Transfer-Molding-Verfahren zum Herstellen eines Kompositbauteils.

22. Verfahren nach Anspruch 20 oder 21, ausgestaltet als Harzinjektionsverfahren.

23. Resin-Transfer-Molding-Verfahren nach einem der Ansprüche 20 bis 22, ausgestaltet zum Herstellen eines Bauteils (301) aus glasfaserverstärktem Kunststoff oder aus kohlenstofffaserverstärktem Kunststoff.

## Claims

1. Resin transfer moulding device (101) for manufacturing a component (301), comprising:
- a vat (104) into which starting material for manufacturing the component (301) is introducable;
- a cover (200) which is insertable onto the vat (104) in such a way that starting material for manufacturing the component (301) is enclosable between the vat (104) and the cover (200);
- a heating device (105) for manufacturing the component (301) by heating starting material (102) enclosable between the vat (104) and the cover (200);
wherein the vat (104) is manufactured from a material having a coefficient of expansion substantially equal to a coefficient of expansion of the manufactured component (301); and the cover (200) is manufactured from a material having a coefficient of expansion greater than the coefficient of expansion of the material of the vat (104); and
wherein the vat and the component have approximately equal coefficients of expansion so as to prevent the cooling component from shrinking onto the vat after production, and the cover made of the material having the greater coefficient of expansion makes it more easily possible to take off the cover after cooling.

2. Resin transfer moulding device (101) according to claim 1, with:
- an injection device (103, 300) for introducing starting material for manufacturing the component (301) between the vat (104) and the cover (200) in a state of the device (101) where the cover (200) is placed on the vat (104).

3. Resin transfer moulding device (101) according to claim 1 or 2, in which the injection device (103) is provided in the vat (104).

4. Device (101) according to any of claims 1 to 3,
wherein the vat (104) and/or the cover (200) are manufactured from a material having a coefficient of expansion such that a component (301) shrinks free from the vat (104) and/or from the cover (200) after manufacture.

5. Resin transfer moulding device (101) according to any of claims 1 to 4,
wherein the vat (104) and/or the cover (200) are manufactured from a material having a coefficient of expansion which deviates from the coefficient of expansion of starting material for manufacturing the component (301) by less than 25 %.

6. Resin transfer moulding device (101) according to any of claims 1 to 5,
wherein the vat (104) and/or the cover (200) are manufactured from a material having a coefficient of expansion which deviates from a coefficient of expansion of starting material for manufacturing the component (301) by less than 10 %.

7. Resin transfer moulding device (101) according to any of claims 1 to 6,
wherein the vat (104) and/or the cover (200) are manufactured from a material having a coefficient of expansion of between 1.0·10⁻⁶ K⁻¹ and 1.3·10⁻⁶ K⁻¹.

8. Resin transfer moulding device (101) according to any of claims 1 to 7,
wherein the vat (104) and/or the cover (200) are manufactured from a material having a coefficient of expansion of between 1.1·10⁻⁶ K⁻¹ and 1.2·10⁻⁶ K⁻¹.

9. Resin transfer moulding device (101) according to either claim 7 or claim 8,
in which the cover (200) is manufactured from a material having a coefficient of expansion greater, but at most 0.2·10-6 K⁻¹ greater, than the coefficient of expansion of the material of the vat (104).

10. Resin transfer moulding device (101) according to any of claims 7 to 9,
wherein the cover (200) is manufactured from a material having a coefficient of expansion greater, but at most 0.1·10⁻⁶ K⁻¹ greater, than the coefficient of expansion of the material of the vat (104).

11. Resin transfer moulding device (101) according to any of claims 1 to 10,
wherein the vat (104) and/or the cover (200) are manufactured from a nickel-steel alloy.

12. Resin transfer moulding device (101) according to claim 11,
wherein the vat (104) and/or the cover (200) are manufactured from a nickel-steel alloy comprising less than 36 percent nickel by weight.

13. Resin transfer moulding device (101) according to either claim 11 or claim 12,
wherein the vat (104) and/or the cover (200) are manufactured from a nickel-steel alloy comprising approximately 33 percent nickel by weight.

14. Resin transfer moulding device (101) according to either claim 12 or claim 13,
wherein the vat (104) and/or the cover (200) are manufactured from a nickel-steel-cobalt alloy.

15. Resin transfer moulding device (101) according to any of claims 1 to 14,
wherein the vat (104) is manufactured from a material having a coefficient of expansion slightly less than a coefficient of expansion of starting material (102) for manufacturing the component (301).

16. Resin transfer moulding device (101) according to any of claims 1 to 15,
wherein the vat (104) is manufactured from a material having a coefficient of expansion at most 5 % less than a coefficient of expansion of starting material (102) for manufacturing the component (301).

17. Resin transfer moulding arrangement (100) for manufacturing a component (301), comprising:
- a resin transfer moulding device (101) for manufacturing a component (301) according to any of claims 1 to 16;
- starting material (102) for manufacturing the component (301), which is introducible into the vat (104) of the resin transfer moulding device (101) or has been introduced into the vat (104) at least in part.

18. Resin transfer moulding arrangement (100) according to claim 17,
in which starting material (102) for manufacturing the component (301) is introducible or has been introduced at least in part directly between the vat (104) and the cover (200).

19. Resin transfer moulding arrangement (100) according to either claim 17 or claim 18, comprising:
- a vacuum suction means (500), by which a manufactured component (301) can be removed from the arrangement (100) after the cover (200) has been taken off.

20. Resin transfer moulding method for manufacturing a component (301), wherein, in the resin transfer moulding method:
- starting material (102) for manufacturing the component (301) is introduced into a vat (104);
- a cover (200) is inserted onto the vat (104) in such a way that the starting material (102) for manufacturing the component (301) is enclosed between the vat (104) and the cover (200);
- the starting material (102) enclosed between the vat (104) and the cover (200) is heated, with which material the component (301) is manufactured;
wherein the vat (104) is manufactured from a material having a coefficient of expansion substantially equal to a coefficient of expansion of the manufactured component (301); and
the cover (200) is manufactured from a material having a coefficient of expansion greater than the coefficient of expansion of the material of the vat (104); and
wherein the vat and the component have approximately equal coefficients of expansion so as to prevent the cooling component from shrinking onto the vat after production, and the cover made of the material having the greater coefficient of expansion makes it more easily possible to take off the cover after cooling.

21. Resin transfer moulding method according to claim 20, configured as a resin transfer moulding method for manufacturing a composite component.

22. Method according to claim 20 or 21, configured as a resin injection method.

23. Resin transfer moulding method according to any of claims 20 to 22, configured for manufacturing a component (301) from glass-fibre-reinforced plastics material or from carbon-fibre-reinforced plastics material.

## Revendications

1. Dispositif de moulage par transfert de résine (101) destiné à la fabrication d'une pièce de construction (301), présentant :
- une cuve (104) dans laquelle de la matière de départ peut être introduite pour la fabrication de la pièce de construction (301),
- un couvercle (200) qui peut être posé sur la cuve (104) de manière à ce que la matière de départ destinée à la fabrication de la pièce de construction (301) puisse être enfermée entre la cuve (104) et le couvercle (200),
- un moyen de chauffage (105) destiné à la fabrication de la pièce de construction (301) au moyen de chauffage de matière de départ (102) pouvant être enfermée entre la cuve (104) et le couvercle (200),
dans lequel la cuve (104) est fabriquée dans une matière ayant un coefficient de dilatation qui est essentiellement identique à un coefficient de dilatation de la pièce de construction (301) fabriquée, et
dans lequel le couvercle (200) est fabriqué dans une matière ayant un coefficient de dilatation qui est supérieur au coefficient de dilatation de la matière de la cuve (104), et
dans lequel la cuve et la pièce de construction présentent des coefficients de dilatation à peu près identiques afin d'éviter un frettage de la pièce de construction en refroidissement sur la cuve après l'achèvement, dans lequel le couvercle constitué de la matière ayant le plus grand coefficient de dilatation a pour effet qu'après le refroidissement un retrait du couvercle est rendu plus facile.

2. Dispositif de moulage par transfert de résine (101) selon la revendication 1, comprenant :
- un moyen d'injection (103, 300) destiné à introduire de la matière de départ destinée à la fabrication de la pièce de construction (301) entre la cuve (104) et le couvercle (200) dans un état du dispositif (101) dans lequel le couvercle (200) est appliqué sur la cuve (104).

3. Dispositif de moulage par transfert de résine (101) selon la revendication 1 ou 2, dans lequel le moyen d'injection (103) est ménagé dans la cuve (104).

4. Dispositif (101) selon l'une quelconque des revendications 1 à 3,
dans lequel la cuve (104) et/ou le couvercle (200) est ou sont fabriqués dans une matière ayant un coefficient de dilatation tel qu'une pièce de construction (301) se rétracte librement de la cuve (104) et/ou du couvercle (200) après la fabrication.

5. Dispositif de moulage par transfert de résine (101) selon l'une quelconque des revendications 1 à 4,
dans lequel la cuve (104) et/ou le couvercle (200) sont fabriqués dans une matière ayant un coefficient de dilatation qui diffère de moins de 25 % d'un coefficient de dilatation de la matière de départ destinée à la fabrication de la pièce de construction (301).

6. Dispositif de moulage par transfert de résine (101) selon l'une quelconque des revendications 1 à 5,
dans lequel la cuve (104) et/ou le couvercle (200) sont fabriqués dans une matière ayant un coefficient de dilatation qui diffère de moins de 10 % d'un coefficient de dilatation de la matière de départ destinée à la fabrication de la pièce de construction (301).

7. Dispositif de moulage par transfert de résine (101) selon l'une quelconque des revendications 1 à 6,
dans lequel la cuve (104) et/ou le couvercle (200) sont fabriqués dans une matière ayant un coefficient de dilatation compris entre 1,0 10⁻⁶ K⁻¹ et 1,3 10⁻⁶ K⁻¹.

8. Dispositif de moulage par transfert de résine (101) selon l'une quelconque des revendications 1 à 7,
dans lequel la cuve (104) et/ou le couvercle (200) sont fabriqués dans une matière ayant un coefficient de dilatation compris entre 1,1 10⁻⁶ K⁻¹ et 1,2 10⁻⁶ K⁻¹.

9. Dispositif de moulage par transfert de résine (101) selon la revendication 7 ou 8,
dans lequel le couvercle (200) est fabriqué dans une matière ayant un coefficient de dilatation qui est plus grand, mais au maximum de 0,2 10⁻⁶ K⁻¹ plus grand que le coefficient de dilatation de la matière de la cuve (104).

10. Dispositif de moulage par transfert de résine (101) selon l'une quelconque des revendications 7 à 9,
dans lequel le couvercle (200) est fabriqué dans une matière ayant un coefficient de dilatation qui est plus grand, mais au maximum de 0,1 10⁻⁶ K⁻¹ plus grand que le coefficient de dilatation de la matière de la cuve (104).

11. Dispositif de moulage par transfert de résine (101) selon l'une quelconque des revendications 1 à 10, dans lequel la cuve (104) et/ou le couvercle (200) est ou sont fabriqués dans un alliage de nickel-acier.

12. Dispositif de moulage par transfert de résine (101) selon la revendication 11,
dans lequel la cuve (104) et/ou le couvercle (200) est ou sont fabriqués dans un alliage de nickel-acier ayant moins de 36 pourcents en poids de nickel.

13. Dispositif de moulage par transfert de résine (101) selon la revendication 11 ou 12,
dans lequel la cuve (104) et/ou le couvercle (200) est ou sont fabriqués dans un alliage de nickel-acier ayant approximativement 33 % en poids de nickel.

14. Dispositif de moulage par transfert de résine (101) selon la revendication 12 ou 13,
- dans lequel la cuve (104) et/ou le couvercle (200) est ou sont fabriqués dans un alliage de nickel-acier-cobalt.

15. Dispositif de moulage par transfert de résine (101) selon l'une quelconque des revendications 1 à 14,
- dans lequel la cuve (104) est fabriquée dans une matière ayant un coefficient de dilatation qui est légèrement plus petit qu'un coefficient de dilatation de la matière de départ (102) destinée à la fabrication de la pièce de construction (301).

16. Dispositif de moulage par transfert de résine (101) selon l'une quelconque des revendications 1 à 15, dans lequel la cuve (104) est fabriquée dans une matière ayant un coefficient de dilatation qui est au maximum de 5 % plus petit qu'un coefficient de dilatation de la matière de départ (102) destinée à la fabrication de la pièce de construction (301).

17. Agencement de moulage par transfert de résine (100) destiné à la fabrication d'une pièce de construction (301), présentant :
- un dispositif de moulage par transfert de résine (101) destiné à la fabrication d'une pièce de construction (301), selon l'une quelconque des revendications 1 à 16,
- de la matière de départ (102) destinée à la fabrication de la pièce de construction (301), laquelle matière peut être introduite dans la cuve (104) du dispositif de moulage par transfert de résine (101) ou est introduite au moins en partie dans la cuve (104).

18. Agencement de moulage par transfert de résine (100) selon la revendication 17,
dans lequel la matière de départ (102) destinée à la fabrication de la pièce de construction (301) peut être directement introduite entre la cuve (104) et le couvercle (200) ou y est introduite au moins en partie.

19. Agencement de moulage par transfert de résine (100) selon la revendication 17 ou 18, comprenant :
- un moyen d'aspiration à vide (500), à l'aide duquel une pièce de construction (301) fabriquée peut être retirée de l'agencement (100) après le retrait du couvercle (200).

20. Procédé de moulage par transfert de résine (100) destiné à la fabrication d'une pièce de construction (301), dans lequel procédé de moulage par transfert de résine
- de la matière de départ (102) destinée à la fabrication de la pièce de construction (301) est introduite dans une cuve (104),
- un couvercle (200) est posé sur la cuve (104) de manière à ce que la matière de départ (102) destinée à la fabrication de la pièce de construction (301) soit enfermée entre la cuve (104) et le couvercle (200),
- la matière de départ enfermée entre la cuve (104) et le couvercle (200) est échauffée, sur quoi la pièce de construction (301) est fabriquée,
dans lequel la cuve (104) est fabriquée dans une matière ayant un coefficient de dilatation qui est essentiellement identique à un coefficient de dilatation de la pièce de construction (301) fabriquée ; et
dans lequel le couvercle (200) est fabriqué dans une matière ayant un coefficient de dilatation qui est supérieur au coefficient de dilatation de la matière de la cuve (104) ; et
dans lequel la cuve et la pièce de construction présentent des coefficients de dilatation à peu près identiques afin d'éviter un frettage de la pièce de construction en refroidissement sur la cuve après l'achèvement, dans lequel le couvercle constitué de la matière ayant le plus grand coefficient de dilatation a pour effet qu'après le refroidissement un retrait du couvercle est rendu plus facile.

21. Procédé de moulage par transfert de résine selon la revendication 20, conçu comme procédé de moulage par transfert de résine destiné à la fabrication d'une pièce de construction composite.

22. Procédé selon la revendication 20 ou 21, conçu comme procédé d'injection de résine.

23. Procédé de moulage par transfert de résine selon l'une quelconque des revendications 20 à 22, conçu pour la fabrication d'une pièce de construction (301) en matière plastique renforcée par fibres de verre ou en matière plastique renforcée par fibres de carbone.
